# EUROPEAN PATENT SPECIFICATION

(11) **EP 2 786 885 B1**
(45) Date of publication and mention of the grant of the patent: **04.10.2017**
(21) Application number: 11876425.7
(22) Date of filing: 30.11.2011
(51) Int. Cl.: B60K 11/04, B60H 1/26, B62D 25/08, B60H 1/00, F01P 1/00

(54) **STRUCTURE FOR FRONT PART OF VEHICLE**
STRUKTUR FÜR DEN VORDERTEIL EINER FAHRZEUGKAROSSERIE
STRUCTURE POUR LA PARTIE AVANT D'UN VÉHICULE

(43) Date of publication of application: 08.10.2014
(73) Proprietor: TOYOTA JIDOSHA KABUSHIKI KAISHA, Toyota-shi, Aichi-ken, 471-8571 (JP)
(72) Inventor: TAMAKOSHI, Koji, Aichi-ken, 471-8571 (JP)
(74) Representative: Kuhnen & Wacker
(86) International application number: PCT/JP2011/077703
(87) International publication number: WO 2013/080339

(56) References cited:
- WO-A1-2010/097890
- WO-A1-2010/097890
- DE-A1- 3 203 927
- JP-A- H 079 841
- JP-A- H08 142 642
- JP-A- H08 142 642
- JP-A- 2001 020 742
- JP-A- 2001 020 742
- JP-A- 2007 050 801

## Description

### Technical Field

The present invention relates to a vehicle front portion structure.

### Background Art

Cooling units, such as a radiator that cools an engine, a condenser of an air conditioner, and the like, are disposed at the front portion of a vehicle, and cooling of the cooling unit is carried out by external air that flows from the vehicle front toward the vehicle rear (see, for example, Patent Document 1).

[Patent Document 1] WO/2010/097890

### DISCLOSURE OF INVENTION

### Technical Problem

However, there are limits to carrying out cooling of a cooling unit only by external air from the vehicle front, and there is room for improvement.
In view of the above-described circumstances, the invention of the present application proposes a vehicle front portion structure that efficiently cools a cooling unit.

### Solution to Problem

A vehicle front portion structure relating to a first aspect comprises: a cooling unit according to all the features of claim 1.

Operation of the vehicle front portion structure relating to the first aspect is described next.
In the vehicle front portion structure relating to the first aspect, the cooling unit, that structures the cooling system of a power unit that drives the wheels, is cooled by cooling wind from the vehicle front and cooling wind that is introduced-in from the cowl portion. Therefore, cooling is carried out more efficiently than being cooled only by cooling wind from the vehicle front.

In a second aspect, in the vehicle front portion structure relating to the first aspect, the cooling wind introducing member is provided with a blower.

Operation of the vehicle front portion structure relating to the second aspect is described next.
In the vehicle front portion structure relating to the second aspect, cooling wind can be actively led to the cooling unit by the blower, and the cooling unit can be cooled efficiently.

In a third aspect, in the vehicle front portion structure relating to the second aspect, the cooling wind introducing member introduces some of cooling wind, that is blown by the blower, into a vehicle cabin interior via an air conditioning unit.

Operation of the vehicle front portion structure relating to the third aspect is described next.
In the vehicle front portion structure relating to the third aspect, some of the cooling wind that is blown by the blower, i.e., external air, is introduced into the vehicle cabin interior via the air conditioning unit.

In the first aspect, the vehicle front portion comprises: a rain water storing portion that is provided at the cowl portion and that stores rain water; and a rain water introducing passage that leads rain water, that is stored in the rain water storing portion, to the cooling wind introducing member.

Operation of the vehicle front portion structure relating to the first aspect is described next.
In the vehicle front portion structure relating to the first aspect, when it rains, rain water can be stored in the rain water storing portion that is provided at the cowl portion.
Further, the rain water that is stored in the rain water storing portion is introduced into the cool wind introducing means via the rain water introducing passage. Due the rain water being sent to the cooling unit by the cool wind introducing means, pollution of the cooling unit can be washed by the rain water.

In a fourth aspect, a filter for removing dirt is provided at a cowl portion side of the rain water introducing passage.

Operation of the vehicle front portion structure relating to the fourth aspect is described next.
In the vehicle front portion structure relating to the fourth aspect, rain water, from which dirt has been removed by the filter, and external air are introduced into the rain water introducing passage. Therefore, the cooling unit can be washed by rain water from which dirt has been removed.

In a fifth aspect, in the vehicle front portion structure relating to any one of the first through fourth aspects, a motor of a compressor that is used in the air conditioner is used as motive power of the blower.

Operation of the vehicle front portion structure relating to the fifth aspect is described next.
In the vehicle front portion structure relating to the fifth aspect, the motor of the compressor that is used at the air conditioner is used as the motive power of the blower. Therefore, the number of parts can be reduced as compared with a case in which the motive power of the blower is provided separately from the motive power of the compressor.

### Advantageous Effects of Invention

As described above, in accordance with the vehicle front portion structure relating to the first aspect, there is the excellent effect that a cooling unit can be cooled efficiently.

In accordance with the vehicle front portion structure relating to the second aspect, the cooling unit can be cooled more efficiently.

In accordance with the vehicle front portion structure relating to the third aspect, ventilation of the vehicle cabin interior can be carried out due to some of the cooling wind, that is blown by the blower, being introduced into the vehicle cabin interior.

In accordance with the vehicle front portion structure relating to the fourth aspect, the cooling unit can be washed by rain water.

In accordance with the vehicle front portion structure relating to the fifth aspect, the cooling unit can be washed by rain water from which dirt has been removed.

In accordance with the vehicle front portion structure relating to the sixth aspect, the number of parts can be reduced.

### BRIEF DESCRIPTION OF DRAWINGS

Fig. 1 is a vertical sectional view along a vehicle longitudinal direction, showing a vehicle front portion structure relating to a first embodiment of the present invention.
Fig. 2 is a vertical sectional view along a vehicle transverse direction, showing main portions of a vehicle front portion structure relating to a second embodiment of the present invention.
Fig. 3 is perspective view showing main portions of the vehicle front portion structure relating to the second embodiment of the present invention.
Fig. 4 is a vertical sectional view along the vehicle longitudinal direction, showing a vehicle front portion structure relating to a third embodiment of the present invention.

### BEST MODES FOR CARRYING OUT THE INVENTION

### [First Embodiment]

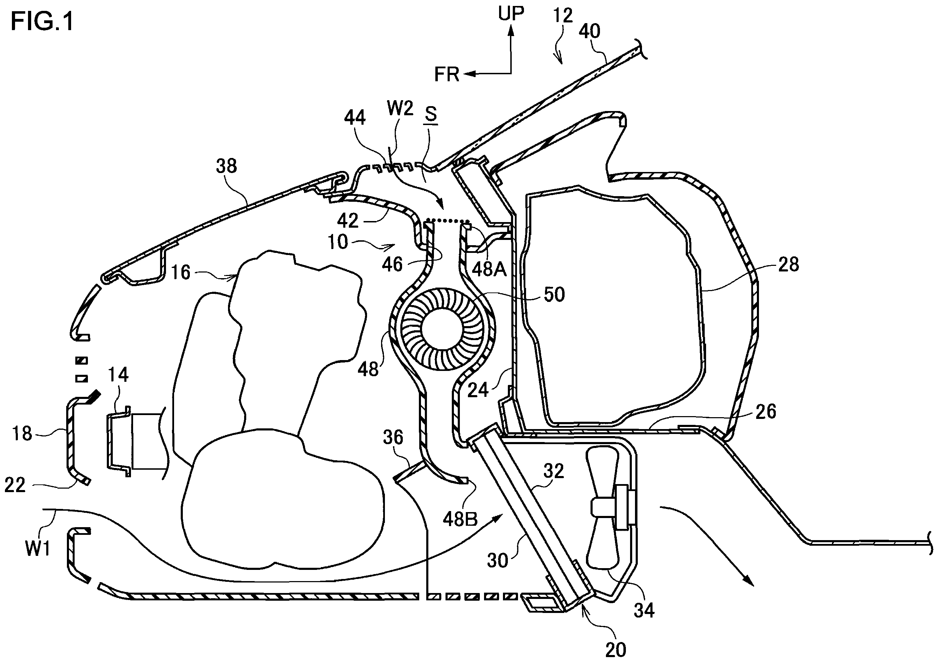

A vehicle front portion structure 10 relating to a first embodiment of the present invention is described on the basis of Fig. 1. Note that arrow FR that is shown appropriately in the drawings indicates the frontward direction in the vehicle longitudinal direction, arrow UP indicates the upward direction in the vehicle vertical direction, arrow IN indicates the vehicle transverse direction inner side, and arrow OUT indicates the vehicle transverse direction outer side, respectively.

As shown in Fig. 1, a power unit 16, such as an engine or the like that drives the wheels, is disposed at the front portion of a vehicle body 12 at the vehicle rear side of a bumper reinforcement 14.

A front bumper cover 18 is disposed at the vehicle front side of the bumper reinforcement 14. An opening 22 is formed in this front bumper cover 18 in order to blow cooling wind to a cooling unit 20 that is described later.

An HVAC (heating and ventilating air conditioning) 28, that serves as an environment controlling unit (air conditioning module) of the air within the vehicle cabin, is disposed above a floor panel 26 that is at the vehicle rear side of a dash panel 24. The HVAC 28 is structured to include an evaporator, a heater core, a PTC heater, various types of ventilation ducts for carrying out blowing of wind to the vehicle cabin interior, duct switching devices for switching the ducts that blow air, and the like.

The cooling unit 20 is disposed beneath the dash panel 24. The cooling unit 20 is structured to include an unillustrated compressor, a condenser 30 that is connected to the evaporator of the HVAC 28 and structures a heat pump, a radiator 32 that carries out cooling of the power unit 16, an electric fan 34, and the like.

Note that, at this cooling unit 20, the condenser 30, the radiator 32 and the electric fan 34 are disposed in that order from the vehicle longitudinal direction front side.

Further, a before-the-radiator duct 36 is disposed at the vehicle front side of the cooling unit 20.

A front hood 38 is provided at the top surface of the front portion of the vehicle body 12, and a front windshield glass 40 is provided at the vehicle body rear and upper side of the front hood 38. A cowl panel 42, that is frame-shaped and extends along the vehicle transverse direction and whose vehicle body upper side is open, is provided at the lower end edge portion of the front windshield glass 40 and beneath the rear end portion side of the front hood 38.

A cowl louver 44 is disposed along the cowl panel 42 at the vehicle body upper side of the cowl panel 42. A space S that extends in the vehicle transverse direction is formed between the cowl panel 42 and the cowl louver 44.

A duct 48 that serves as a cooling wind introducing member extends in the vertical direction at the vehicle front side of the dash panel 24. An opening portion 46 is formed in the cowl panel 42, and an upper end 48A side of the duct 48 is inserted into this opening portion 46 and projects-out into the space S. On the other hand, a lower end 48B of the duct 48 is disposed above the vehicle front side of the cooling unit 20 and opens toward the condenser 30.

A blower fan 50 is disposed at the intermediate portion of the duct 48. The blower fan 50 is rotated by an unillustrated motor. When the blower fan 50 rotates, external air is sucked-in from the upper end 48A of the duct 48, and the external air (cooling wind) is blown from the lower end 48B of the duct 48 toward the condenser 30 and the radiator 32.

### (Operation)

Operation of the vehicle front portion structure 10 of the present embodiment is described next.

When the vehicle travels, cooling wind W1, that is introduced-in from the opening 22 of the front bumper cover 18, flows beneath the power unit 16 toward the vehicle rear side, and is blown toward the cooling unit 20. Note that the cooling efficiency of the condenser 30 and the radiator 32 can be improved due to the electric fan 34 being driven.

Moreover, in the vehicle front portion structure of the present embodiment, the blower fan 50 is rotated, and external air that is sucked-in from the cowl side can be blown as cooling wind W2 from the lower end of the duct 48 toward the condenser 30 and the radiator 32. Therefore, the efficiency of heat exchange can be improved as compared with a case of only the cooling wind W1 (traveling wind) that is introduced-in from the opening 22 of the front bumper cover 18.

Due thereto, it becomes possible to make the cooling unit 20 compact and lighten the weight thereof, and the degrees of freedom in placement of the cooling unit 20 also can be improved.

### [Second Embodiment]

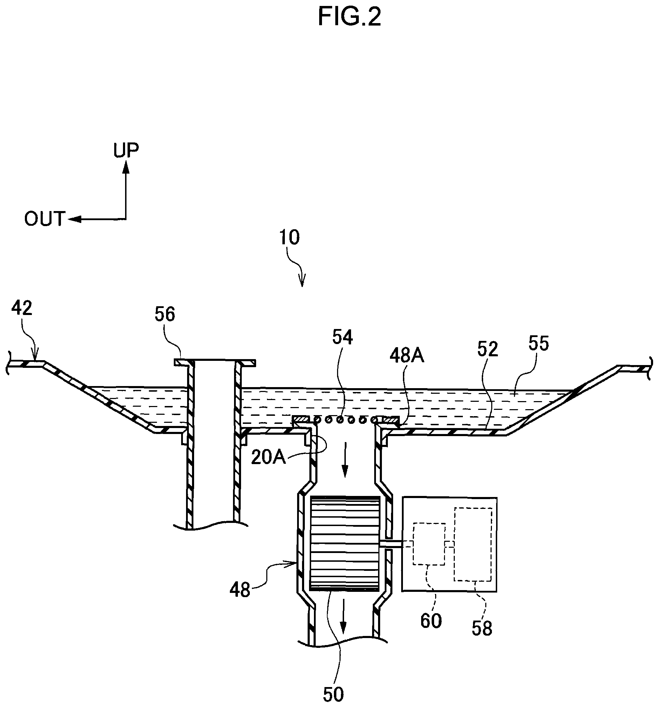

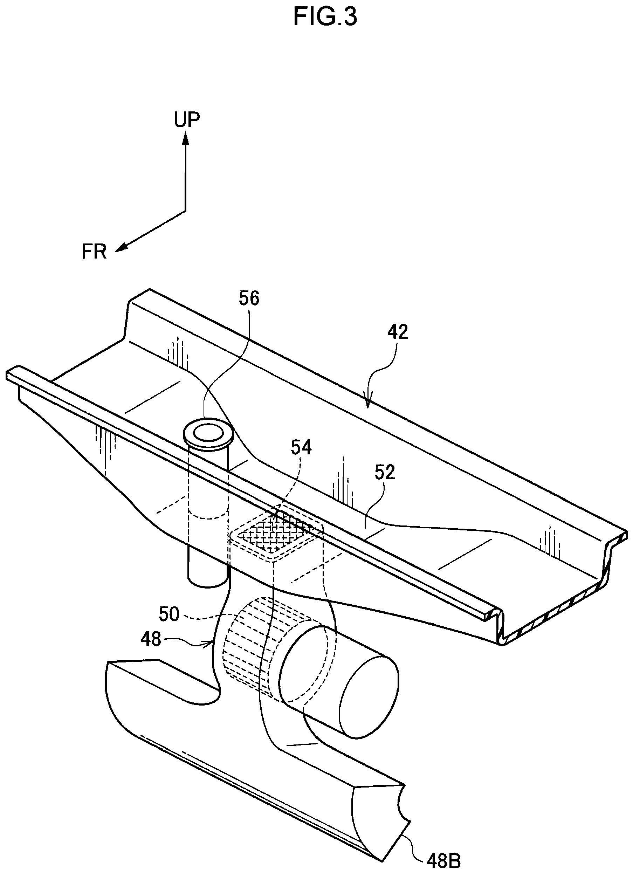

The vehicle front portion structure 10 relating to a second embodiment of the present invention is described in accordance with Fig. 2 and Fig. 3. Note that structures that are the same as those of the first embodiment are denoted by the same reference numerals, and description thereof is omitted.

As shown in Fig. 2 and Fig. 3, in the vehicle front portion structure 10 of the present embodiment, a concave portion 52, that collects and can store rain water that has flowed into the cowl panel 42, is formed in the cowl panel 42. Note that the bottom portion of the concave portion 52 is at the lowest position of the cowl panel 42.

The upper end 48A side of the duct 48 is inserted in an opening portion 20A that is formed in the bottom portion of the concave portion 52. In the vehicle front portion structure 10 of the present embodiment, the upper end 48A of the duct 48 is disposed at the bottom portion of the concave portion 52, and rain water 55 that has accumulated in the concave portion 52 flows into the duct 48. Note that the duct 48 of the present embodiment is the cooling wind introducing member of the present invention, but also serves as the rain water introducing passage of the present invention.
A filter 54 is mounted to the upper end 48A of the duct 48 so that dirt and the like do not enter into the duct.

Moreover, a drainage duct 56 is mounted to the concave portion 52. The upper end of the drainage duct 56 is disposed further upward than the bottom portion of the concave portion 52, and is provided for use in overflow so that rain water does not overflow-out from the concave portion 52. Note that the rain water that has flowed into the drainage duct 56 is drained-out toward the bottom of the vehicle.

Note that, in the present embodiment, the blower fan 50 is rotated by a motor 60 that drives a compressor 58 that is a part that structures a heat pump that is connected to the HVAC 28.

### (Operation)

Operation of the vehicle front portion structure 10 of the present embodiment is described next.

In the vehicle front portion structure 10 of the present embodiment, due to the blower fan 50 being rotated, external air, and the rain water that has accumulated in the concave portion 52 of the cowl panel 42, are pulled into the duct, and the pulled-in external air and rain water 55 can be blown onto the condenser 30 and the radiator 32. Due thereto, the condenser 30 and the radiator 32 can be washed by the rain water 55, and a deterioration in cooling efficiency due to pollution adhering to the condenser 30 and the radiator 32 can be suppressed.

Further, in the vehicle front portion structure 10 of the present embodiment, the blower fan 50 is structured so as to rotate by the motor 60 that drives the compressor 58. Therefore, the number of parts can be reduced as compared with a case in which the blower fan 50 is driven by a motor that is exclusively used therefor.

### [Third Embodiment]

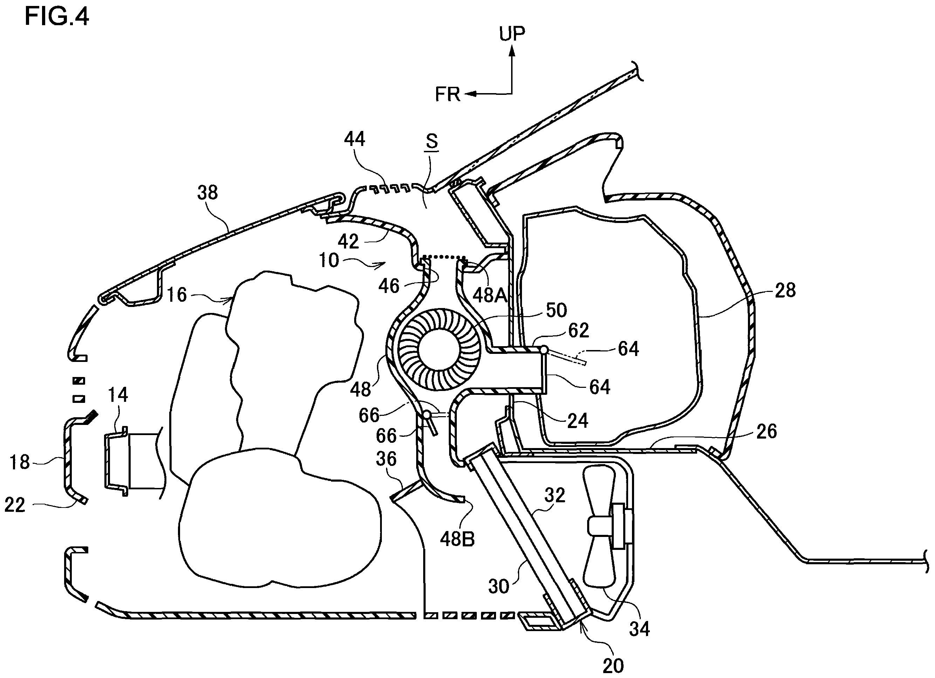

The vehicle front portion structure 10 relating to a third embodiment of the present invention is described in accordance with Fig. 4. Note that structures that are the same as those of the above-described embodiments are denoted by the same reference numerals, and description thereof is omitted.

As shown in Fig. 4, in the vehicle front portion structure 10 of the present embodiment, a communication passage 62 that communicates with the HVAC 28 is formed at the side portion of the blower fan 50 at the length direction intermediate portion of the duct 48. A first flap 64 that opens and closes the communication passage 62 is provided at this communication passage 62.

Moreover, a second flap 66 that opens and closes the duct 48 is provided at the duct 48, further toward the cooling unit 20 side than the blower fan 50.

### (Operation)

In the vehicle front portion structure 10 of the present embodiment, in a case in which external air that has been introduced in is to be sent into the vehicle cabin for example, by opening the first flap 64 and closing the second flap 66, the external air that is sucked-in at the duct 48 can be introduced into the HVAC 28 via the communication passage 62, and the blower fan 50 can be made to have the function of a usual blower fan at the vehicle cabin interior unit.

On the other hand, in a case in which external air that has been sucked-in at the duct 48 is to be blown to the cooling unit 20, it suffices to close the first flap 64 and open the second flap 66.
Note that it is also possible to set both the first flap 64 and the second flap 66 in open states.

### [Other Embodiments]

In the above-described embodiments, cooling of the radiator 32 and the condenser 30 is carried out by cooling wind. However, cooling of a part other than the radiator 32 and the condenser 30, such as an intercooler, an oil cooler, or the like for example, may be carried out provided that it is a part that is to be cooled.

Embodiments of the present invention have been described above, but the present invention is not limited to the above description, and, other than the above, can of course be implemented by being modified in various ways within the scope of the invention as defined by the claims.

## Claims

1. A vehicle front portion structure (10) comprising:
a cooling unit (20) that is provided at a vehicle front portion of a vehicle cabin outer side of a dash panel (24), and into which cooling wind from a vehicle front is introduced, and that structures a cooling system of a power unit that drives wheels; and
a cooling wind introducing member that introduces, into the cooling unit (20), cooling wind that has been introduced in from a cowl portion that is disposed further toward a vehicle front side than the dash panel (24);
the vehicle front portion structure (10) further comprising:
a rain water storing portion (52) that is provided at the cowl portion and that stores rain water; and
a rain water introducing passage (48) that leads rain water, which is stored in the rain water storing portion (52), to the cooling wind introducing means.

2. The vehicle front portion structure (10) of Claim 1, wherein the cooling wind introducing member is provided with a blower (50).

3. The vehicle front portion structure (10) of Claim 2, wherein the cooling wind introducing member introduces some of the cooling wind, which is blown by the blower (50), into a vehicle cabin interior via an air conditioning unit (28).

4. The vehicle front portion structure (10) of Claim 1, wherein a filter (54) for removing dirt is provided at a cowl portion side of the rain water introducing passage (48).

5. The vehicle front portion structure (10) of Claim 3, wherein a motor (60) of a compressor (58) that is used in the air conditioning unit (28) is used as motive power of the blower (50).

## Patentansprüche

1. Fahrzeugvorderabschnittsstruktur (10), aufweisend:
eine Kühleinheit (20), die sich an einem Fahrzeugvorderabschnitt einer Fahrzeugkabinenaußenseite eines Armaturenbretts (24) befindet, und in die ein Kühlwind von einer Fahrzeugfront aus eingebracht wird, und die ein Kühlsystem einer Leistungseinheit, die Räder antreibt, strukturiert; und
ein Kühlwindeinbringungselement, das Kühlwind, der von einem Spritzwandabschnitt eingeführt wurde, der sich weiter in Richtung einer Fahrzeugvorderseite befindet als das Armaturenbrett (24), in die Kühleinheit (20) einbringt;
wobei die Fahrzeugvorderabschnittsstruktur (10) ferner aufweist:
einen Regenwasserspeicherabschnitt (52), der sich an dem Spritzwandabschnitt befindet und der Regenwasser speichert; und
eine Regenwassereinbringungsleitung (48), die Regenwasser, das in dem Regenwasserspeicherabschnitt (52) gespeichert ist, in die Kühlwindeinbringungseinrichtung leitet.

2. Fahrzeugvorderabschnittsstruktur (10) nach Anspruch 1, wobei das Kühlwindeinbringungselement mit einem Gebläse (50) versehen ist.

3. Fahrzeugvorderabschnittsstruktur (10) nach Anspruch 2, wobei das Kühlwindeinbringungselement etwas von dem Kühlwind, der durch das Gebläse (50) geblasen wird, über eine Klimatisierungseinheit (28) in ein Inneres der Fahrzeugkabine einbringt.

4. Fahrzeugvorderabschnittsstruktur (10) nach Anspruch 1, wobei ein Filter (54) zum Entfernen von Schmutz an einer Spritzwandabschnittseite der Regenwassereinbringungsleitung (48) vorhanden ist.

5. Fahrzeugvorderabschnittsstruktur (10) nach Anspruch 3, wobei ein Motor (60) eines Kompressors (58), der in der Klimatisierungseinheit (28) verwendet wird, als Antriebsleistung des Gebläses (50) verwendet wird.

## Revendications

1. Structure pour la partie avant d'un véhicule (10), comprenant :
une unité de refroidissement (20) qui est fournie à une partie avant d'un véhicule d'un côté externe d'un habitacle de véhicule d'un panneau de tableau de bord (24) et dans lequel est introduit un vent de refroidissement provenant d'une partie avant de véhicule, et qui compose un système de refroidissement d'une unité de puissance qui entraîne des roues ; et
un élément d'introduction de vent de refroidissement qui introduit, à l'intérieur de l'unité de refroidissement (20), un vent de refroidissement qui a été introduit à partir d'une partie de capot qui est agencée plus vers un côté avant de véhicule que vers le panneau de tableau de bord (24) ;
la structure de partie avant de véhicule (10) comprenant en outre :
une partie de stockage des eaux pluviales (52) qui est fournie à la partie de capot et qui stocke les eaux pluviales ; et
un passage d'introduction des eaux pluviales (48) qui conduit les eaux pluviales, stockées dans la partie de stockage des eaux pluviales (52), au moyen d'introduction de vent de refroidissement.

2. Structure de partie avant de véhicule (10) selon la revendication 1, dans laquelle l'élément d'introduction de vent de refroidissement est équipé d'une soufflerie (50).

3. Structure de partie avant de véhicule (10) selon la revendication 2, dans laquelle l'élément d'introduction de vent de refroidissement introduit une partie du vent de refroidissement, qui est soufflé par la soufflerie (50), à l'intérieur d'un intérieur d'habitacle de véhicule par l'intermédiaire d'une unité de climatisation (28).

4. Structure de partie avant de véhicule (10) selon la revendication 1, dans laquelle un filtre (54) destiné à retirer les impuretés est fourni à un côté de partie de capot du passage d'introduction des eaux pluviales (48).

5. Structure de partie avant de véhicule (10) selon la revendication 3, dans laquelle un moteur (60) d'un compresseur (58) qui est utilisé dans l'unité de climatisation (28) est utilisé en tant que force motrice de la soufflerie (50).
